# EUROPÄISCHE PATENTSCHRIFT

(11) **EP 1 224 791 B1**
(45) Veröffentlichungstag und Bekanntmachung des Hinweises auf die Patenterteilung: **26.08.2009**
(21) Anmeldenummer: 00979427.2
(22) Anmeldetag: 13.10.2000
(51) Int. Cl.: H04M 1/247, H04M 1/725, G06F 3/023

(54) **MOBILES TELEKOMMUNIKATIONSENDGERÄT MIT OBJEKTORIENTIERTER BEDIENOBERFLÄCHE ZUR DARSTELLUNG EINGEHENDER RUFE ALS BILDSYMBOLE**
MOBILE TELECOMMUNICATION DEVICE WITH OBJECT-ORIENTED USER INTERFACE FOR DISPLAYING INCOMING CALLS AS ICONS
TERMINAL MOBILE DE TELECOMMUNICATIONS AVEC INTERFACE D'UTILISATEUR ORIENTÉE OBJET POUR LA REPRÉSENTATION D'APPELS ENTRANTS AVEC DES ICONES

(30) Priorität: 15.10.1999 DE 19949716
(43) Veröffentlichungstag der Anmeldung: 24.07.2002
(73) Patentinhaber: IPCom GmbH & Co. KG, 82049 Pullach (DE)
(72) Erfinder: GIESEKE, Arnold, 31180 Giesen (DE)
(74) Vertreter: Gigerich, Jan
(86) Internationale Anmeldenummer: PCT/DE2000/003605
(87) Internationale Veröffentlichungsnummer: WO 2001/030052

(56) Entgegenhaltungen:
- EP-A- 0 844 778
- WO-A-00/68773
- WO-A-98/30004
- US-A- 5 848 356

## Beschreibung

### Stand der Technik

Die Erfindung geht von einem mobilen Telekommunikationsendgerät nach der Gattung des Hauptanspruchs aus.

Mobile Telekommunikationsendgeräte mit einer Bedienoberfläche, die eine Anzeigevorrichtung umfasst, sind bereits bekannt.

Die WO-A-98/30004 zeigt ein Telekommunikationsendgerät mit einer Anzeigeneinrichtung, auf der Bildsymbole dargestellt werden. Diese Bildsymbole repräsentieren verschiedene Applikationen des Telekommunikationsendgeräts, welche durch Anwahl ausgewählt werden.

In der EP 8 44 778 A wird eine Lösung angegeben, nach dem ein eingehender Ruf dahingehend analysiert wird, ob zu der anrufenden Rufnummer ein Name in einem Telefonbuchspeicher vorliegt. Ist dies der Fall, wird dieser Name dargestellt, ansonsten die anrufende Nummer.

Die US 5 848 356 zeigt ein Funkgerät bei welchem verschiedene Anwendungen durch Bildsymbole dargestellt werden. Ein Benutzer hat zuerst ein Menü zu aktivieren, dann den Speicher für zu lesende Nachrichten aufzurufen, um dann in diesem Speicher eine eingegangene Nachricht zu lesen.

### Vorteile der Erfindung

Das erfindungsgemäße mobile Telekommunikationsendgerät mit den Merkmalen des Hauptanspruchs hat demgegenüber den Vorteil, dass mehrere verschiedene, noch nicht entgegengenommene, eingehende Rufe gleichzeitig and der Anzeigevorrichtung dargestellt werden, wobei die eingehenden Rufe als Bildsymbole dargestellt werden und einer der eingehenden Rufe durch

Auswahl des entsprechenden Bildsymbols entgegengenommen wird. Auf diese Weise wird eine eine vom Benutzer leicht zu erfassende, übersichtliche Darstellung aller nocht nicht bearbeiteter Rufe erzeugt, die mit einer intuitiven Auswahlprozedur aktiviert werden können. Somit wird eine vereinfachte Bedienung bei erheblicher Funktionsauswahl geschaffen, die eine schnellere und fehlerfreiere Benutzung ermöglicht.

Dabei werden die Bedienfunktionen als Bildsymbole an der Anzeigevorrichtung dargestellt und sind als solche an der Anzeigevorrichtung auswählbar bzw. aktivierbar. Die Bedienfunktionen müssen somit vom Benutzer nicht mehr durch Eingabe bestimmter Tastenkombinationen gestartet werden. Die bildliche Darstellung setzt beim Benutzer auch keine Sprachkenntnisse voraus. Die zur Aktivierung der Bedienfunktionen erforderlichen logischen Befehlsroutinen werden auf eine für den Benutzer des mobilen Telekommunikationsendgerätes nicht sichtbare Verarbeitungsebene verlagert. Eine Kenntnis der logischen und technischen Zusammenhänge zur Aktivierung der Bedienfunktionen ist nicht mehr notwendig, da sie im Hintergrund abgearbeitet werden. Neue und komplexere Dienste, wie zum Beispiel Multimediadienste, werden auf diese Weise für den Benutzer einfacher zugänglich, da er die zur Nutzung der Multimediadienste notwendigen technischen Abläufe der zugeordneten Bedienfunktionen nicht mehr kennen muss, sondern diese Funktionen einfach durch Auswahl eines zugeordneten Objektes an der Anzeigevorrichtung starten kann.

Durch die in den Unteransprüchen aufgeführten Maßnahmen sind vorteilhafte Weiterbildungen und Verbesserungen des im Hauptanspruchs angegebenen mobilen Telekommunikationsendgerätes möglich.

Besonders vorteilhaft ist es, dass sich die Bildsymbole je nach Art des eingehenden Rufs unterscheiden. Auf diese Weise lässt sich die Art des eingehenden Rufs besonders übersichtlich an der Anzeigevorrichtung gestalten. Es ist außerdem möglich, mehrere verschiedene eingehende Rufe unterschiedlicher Art gleichzeitig an der Anzeigevorrichtung darzustellen und somit dem Benutzer eine Auswahl zu ermöglichen, welchen der eingehenden Rufe er entgegennehmen möchte. Durch Auswahl und Aktivierung eines solchen Bildsymbols kann dann die erforderliche Bedienfunktion zur Entgegennahme des zugehörigen Rufs automatisch gestartet werden, um die mit dem Ruf eingehenden Informationen zur Verfügung zu stellen bzw. wiederzugeben.

Ein weiterer Vorteil besteht darin, dass Bedienfunktionen kontextorientiert an der Anzeigevorrichtung darstellbar sind. Auf diese Weise kann Platz an der Anzeigevorrichtung eingespart werden, da nur die für den jeweils aktuellen Betriebszustand erforderlichen Bedienfunktionen an der Anzeigevorrichtung dargestellt werden müssen. Die Übersichtlichkeit wird somit für den Benutzer weiter erhöht, da ihm keine für den aktuellen Betriebszustand unnötigen Bedienfunktionen zur Auswahl und Aktivierung angeboten werden.

Ein weiterer Vorteil besteht darin, dass mindestens eine Auswahlfunktion als Bildsymbol an der Anzeigevorrichtung darstellbar und bei Auswahl des entsprechenden Bildsymbols aktivierbar ist. Auf diese Weise ist die Auswahl und Aktivierung von Auswahlfunktionen an der Anzeigevorrichtung ebenfalls besonders übersichtlich und für den Benutzer ohne Sprachkenntnisse möglich. Der Bedienkomfort für den Benutzer wird somit weiter erhöht.

Besonders vorteilhaft ist es, daß die Bedienfunktionen mittels eines Mauszeigers zur Aktivierung auswählbar sind. Auf diese Weise ist ebenfalls eine grafische Möglichkeit zur Auswahl und Aktivierung der Bedienfunktionen gegeben, die keine Sprachkenntnisse und nur minimale Bedienkenntnisse des Benutzers voraussetzen.

Entsprechend vorteilhaft ist eine Ausbildung der Anzeigevorrichtung als berührungssensitive Anzeigevorrichtung, bei der eine dargestellte Bedienfunktion durch Berührung der ihr zugeordneten objektorientierten Darstellung an der Anzeigevorrichtung zur Aktivierung auswählbar ist.

Im Fall von Sprachkenntnissen des Benutzers ist auch eine Auswahl und Aktivierung einer objektorientierten an der Anzeigevorrichtung dargestellten Bedienfunktion durch Spracheingabe besonders vorteilhaft, da sie eine berührungslose Auswahl und Aktivierung der Bedienfunktion ermöglicht und somit zum Einsatz in einem Kraftfahrzeug oder für Behinderte geeignet ist.

### Zeichnung

Ein Ausführungsbeispiel der Erfindung ist in der Zeichnung dargestellt und in der nachfolgenden Beschreibung näher erläutert.

Es zeigen
Figur 1 ein erfindungsgemäßes mobiles Telekommunikationsendgerät mit einer Anzeigevorrichtung in einem ersten Betriebszustand des mobilen Telekommunikationsendgerätes und
Figur 2 die Anzeigevorrichtung in einem zweiten Betriebszustand des mobilen Telekommunikationsendgerätes.

### Beschreibung des Ausführungsbeispiels

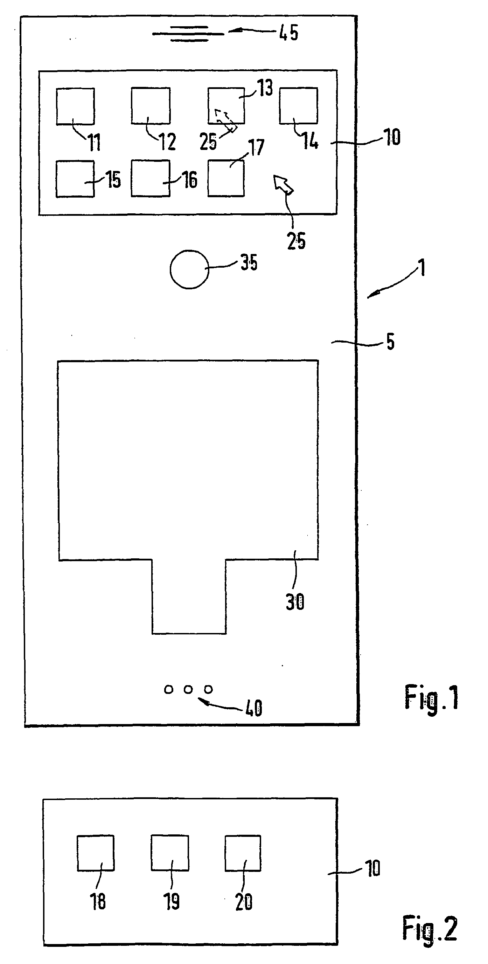

In Figur 1 kennzeichnet die Ziffer 1 ein mobiles Telekommunikationsendgerät, das beispielsweise als Mobiltelefon oder Schnurlos-Telefon ausgebildet sein kann. Das mobile Telekommunikationsendgerät 1 umfaßt eine Bedienoberfläche 5 mit einer Anzeigevorrichtung 10. Die Anzeigevorrichtung 10 kann als Flüssigkristalldisplay ausgebildet sein. Zusätzlich kann die Bedienoberfläche 5 eine als alphanumerische Zehnertastatur 30 ausgebildete Eingabeeinheit aufweisen. Diese ist jedoch für die Funktionsweise der Erfindung nicht erforderlich. Üblicherweise umfaßt das mobile Telekommunikationsendgerät 1 eine Hörkapsel 45 mit einem Lautsprecher und eine Sprechkapsel 40 mit einem Mikrofon. Weiterhin kann die Bedienoberfläche 5 vorzugsweise zwischen der Anzeigevorrichtung 10 und der Eingabeeinheit 30 einen Trackball 35 aufweisen, wie er zur Steuerung eines Mauszeigers, beispielsweise bei einem Laptop, bekannt ist.

An der Anzeigevorrichtung 10 sind Bedienfunktionen des mobilen Telekommunikationsendgerätes 1 objektorientiert darstellbar und für eine Aktivierung auswählbar. Jeder Bedienfunktion ist dabei ein Objekt zugeordnet, das an der Anzeigevorrichtung 10 dargestellt ist. Das jeweilige Objekt repräsentiert dabei in der Regel eine Folge nacheinander auszuführender Software- und/oder Hardware-Befehle oder -Anwendungen, die notwendig sind, um die zugehörige Bedienfunktion zu realisieren. Wird ein solches Objekt an der Anzeigevorrichtung 10 ausgewählt und aktiviert, so werden die erforderlichen Befehle der zugehörigen Bedienfunktion nacheinander automatisch ausgeführt. Der Benutzer muß dazu keine aufwendige Tastenkombination beispielsweise zur Aktivierung einzelner Befehle der zugehörigen Bedienfunktion eingeben und aufgrund der Einfachheit der Bedienung kann auch ein Blick in die Bedienungsanleitung entfallen. Dem Benutzer werden die Bedienungsfunktionen somit besonders übersichtlich zur Auswahl und Aktivierung dargestellt, so daß er Zeit und Aufwand bei der Bedienung des mobilen Telekommunikationsendgerätes 1 spart.

Diese Übersichtlichkeit kann auch dadurch erhöht werden, daß die objektorientierte Darstellung der Bedienfunktionen an der Anzeigevorrichtung 10 mittels Bildsymbolen erfolgt. Somit erkennt der Benutzer am entsprechenden Bildsymbol sofort die zugeordnete Bedienfunktion.

Im beschriebenen Ausführungsbeispiel soll die Anzeigevorrichtung 10 kontextsensitiv ausgebildet sein, d.h. nur diejenigen Bedienfunktionen darstellen, deren Bedienung im jeweiligen Betriebszustand des mobilen Telekommunikationsendgerätes 1 auch möglich ist. Somit wird Platz an der Anzeigevorrichtung 10 eingespart und der Benutzer vor der Bedienung einer nicht zum aktuellen Betriebszustand gehörenden Bedienfunktion bewahrt. Die Verwendung einer kontextorientierten bzw. kontextsensitiven Anzeigevorrichtung 10 ist jedoch für die Funktion der Erfindung nicht obligatorisch. In der Figur 1 ist das mobile Telekommunikationsendgerät 1 in einem ersten Betriebszustand dargestellt, in dem an der Anzeigevorrichtung 10 eingehende Rufe als Bildsymbole dargestellt werden. Dabei sind beispielhaft sieben Bildsymbole 11, 12, 13, 14, 15, 16, 17 an der Anzeigevorrichtung 10 dargestellt, die stellvertretend und nicht abschließend für sieben verschiedene Arten von eingehenden Rufen stehen. So kann ein erstes Bildsymbol 11 beispielsweise für einen herkömmlichen eingehenden Sprachanruf stehen. Ein zweites Bildsymbol 12 steht beispielsweise für einen eingehenden Ruf über das Internet. Ein drittes Bildsymbol 13 steht beispielsweise für einen eingehenden Videobildanruf. Ein viertes Bildsymbol 14 steht beispielsweise für einen eingehenden Faxanruf. Ein fünftes Bildsymbol 15 steht beispielsweise für eine eingehende elektronische Postnachricht, beispielsweise in Form eines E-Mails. Ein sechstes Bildsymbol 16 steht beispielsweise für eine eingehende Kurznachricht, beispielsweise nach dem Short Message Service (SMS) System. Ein siebtes Bildsymbol 17 stellt beispielsweise ein über ein Telekommunikationsnetz eingehendes Datenfile dar. Alle genannten eingehenden Rufe werden dabei über ein Telekommunikationsnetz, beispielsweise ein Funktelekommunikationsnetz, zum mobilen Telekommunikationsendgerät 1 übertragen und erfordern im Fall der elektronischen Postnachricht oder dem eingehenden Ruf über das Internet einen Internet-Zugang des mobilen Telekommunikationsendgerätes 1 über das Funktelekommunikationsnetz bzw. einen Zugang zu einem Rechnernetz über das Funktelekommunikationsnetz im Fall der Übertragung von Datenfiles. Geht ein entsprechender Ruf über das Funktelekommunikationsnetz am mobilen Telekommunikationsendgerät 1 ein, so wird das der Art des eingehenden Rufes entsprechende Bildsymbol an der Anzeigevorrichtung 10 zur Darstellung gebracht, wobei sich die Bildsymbole in vorteilhafter Weise je nach Art des eingehenden Rufs voneinander unterscheiden. So kann ein eingehender herkömmlicher Sprachanruf durch ein stilisiertes Telefon als Bildsymbol dargestellt werden. Ein eingehender Faxanruf kann als stilisiertes Faxgerät als Bildsymbol dargestellt werden. So kann für jede Art eines eingehenden Rufs ein zugeordnetes Bildsymbol gefunden werden, das die Zuordnung des eingehenden Rufs zu einer der vorgenannten Arten ermöglicht. Dies stellt für den Benutzer eine besonders anschauliche und übersichtliche Möglichkeit dar, nicht nur einen eingehenden Ruf, sondern auch seine Art schnell zu erkennen. Die mit den Bildsymbolen 11, 12,...,17 verbundenen Bedienfunktionen dienen dabei der Entgegennahme des entsprechend durch das zugehörige Bildsymbol dargestellten eingehenden Rufs. Zur Entgegennahme eines eingehenden Rufs muß nun das zugehörige Bildsymbol ausgewählt werden. Dies kann beispielsweise dadurch erfolgen, daß ein an der Anzeigevorrichtung 10 dargestellter Mauszeiger 25 mit Hilfe des Trackballs 35 über die Anzeigevorrichtung 10 bis zu dem gewünschten Bildsymbol bewegt wird. Gemäß dem Ausführungsbeispiel nach Figur 1 ist der Mauszeiger 25 zum dritten Bildsymbol 13 bewegt worden, wie die gestrichelte Darstellung erkennen läßt. Die Aktivierung der dem ausgewählten Bildsymbol zugeordneten Bedienfunktion kann nun beispielsweise durch Drücken des Trackballs 35 oder durch Betätigen einer Eingabetaste an der Eingabeeinheit 30 erfolgen.

Es kann auch vorgesehen sein, zusätzlich oder anstelle des Trackballs 35 sogenannte Cursortasten an der Eingabeeinheit 30 vorzusehen, durch deren Betätigung der Mauszeiger 25 horizontal oder vertikal über die Anzeigevorrichtung 10 bewegt werden kann.

Eine Lösung zur Auswahl und Aktivierung von Bedienfunktionen an der Anzeigevorrichtung 10 ohne die Verwendung eines zusätzlichen Bedienelements, wie beispielsweise eines Trackballs oder von Tasten einer Eingabeeinheit, kann dadurch realisiert werden, daß die Anzeigevorrichtung 10 berührungssensitiv ausgebildet wird. Die Auswahl einer gewünschten Bedienfunktion erfolgt dann dadurch, daß das entsprechende Bildsymbol berührt wird. Zur Aktivierung der zugehörigen Bedienfunktion kann eine weitere bzw. wiederholte Berührung desselben Bildsymbols vorgesehen sein. Auswahl und Aktivierung einer Bedienfunktion kann auch durch eine einzige Berührung des zugehörigen Bildsymbols erfolgen, nämlich indem dieses mindestens für eine vorgegebene Zeit berührt wird.

Die Auswahl und Aktivierung von Bedienfunktionen über eine berührungssensitive Anzeigevorrichtung 10 kann zusätzlich oder alternativ mittels des Mauszeigers 25 erfolgen.

Zusätzlich oder alternativ kann weiterhin eine dritte Möglichkeit zur Auswahl und Aktivierung von Bedienfunktionen mittels Spracheingabe vorgesehen sein. Diese erfolgt über die Sprechkapsel 40 mit dem eingebauten Mikrofon. Die Spracheingabe zur Auswahl und Aktivierung einer Bedienfunktion in Zuordnung zum zugehörigen Bildsymbol kann dabei beispielsweise wie folgt erfolgen:
Soll ein eingehender Faxanruf entgegengenommen werden, so erfolgt die Auswahl durch Spracheingabe des Worts "Fax". Die Aktivierung der Bedienfunktion also der Entgegennahme des eingehenden Faxanrufs erfolgt dann durch die darauf einzugebende Spracheingabe des Wortes "Start".

Gemäß Figur 2 ist die Anzeigevorrichtung 10 in einem zweiten Betriebszustand des mobilen Telekommunikationsendgerätes 1 dargestellt. Die kontextorientierte Ausbildung der Anzeigevorrichtung 10 ermöglicht im zweiten Betriebszustand eine Darstellung von Bedienfunktionen des mobilen Telekommunikationsendgerätes 1 mittels Bildsymbolen 18, 19, 20, die von den im ersten Betriebszustand gemäß der Figur 1 an der Anzeigevorrichtung dargestellten Bildsymbolen 11, 12, 13, 14, 15, 16, 17 bzw. den zugeordneten Bedienfunktionen verschieden sind. Der zweite Betriebszustand des mobilen Telekommunikationsendgerätes 1 wird dabei in diesem Beispiel aus dem ersten Betriebszustand heraus erreicht, wenn im ersten Betriebszustand das zweite Bildsymbol 12 ausgewählt und aktiviert wurde, um einen eingehenden Faxanruf entgegenzunehmen. Im zweiten Betriebszustand wird dann dem Benutzer an der Anzeigevorrichtung 10 mittels einem achten Bildsymbol 18 eine Auswahlfunktion angeboten, durch deren Auswahl und Aktivierung der eingehende Faxanruf in Textform an der Anzeigevorrichtung 10 dargestellt wird, wozu diese zuvor in einen weiteren dritten Betriebszustand zur Textwiedergabe eingehender Anrufe umgeschaltet wird. Dazu wird bei dieser Bedienfunktion beispielsweise zunächst automatisch eine Anwendung aufgerufen, die das eingegangene Fax von einem Netzbetreiber in das mobile Telekommunikationsendgerät 1 lädt, wenn es zum Beispiel wegen vorheriger Nicht-Erreichbarkeit des Benutzers des mobilen Telekommunikationsendgeräts 1 beim Netzbetreiber gespeichert wurde. Anschließend wird eine Anwendung aufgerufen, die automatisch eine Wiedergabe des geladenen Faxes beispielsweise in einem Bitmap-Format (BMP) bewirkt. Anschließend wird automatisch eine Texterkennungs-Anwendung aufgerufen, die Texte im gemäß dem BMP-Format dargestellten Faxanruf erkennt und beispielsweise in ASCII-Textzeichen umwandelt, so daß eine Textverarbeitung des eingegangenen Faxes ermöglicht wird. Die beschriebenen Vorgänge zum sukzessiven Aufruf der Anwendungen für den eingegangenen Faxanruf werden bei Auswahl und Aktivierung des achten Bildsymbols 18 automatisch gestartet und durchgeführt, so daß sich die beschriebene objektorientierte Verarbeitung ergibt. Der Benutzer des mobilen Telekommunikationsendgerätes 1 muß sich somit nicht selbst darum kümmern, das eingegangene Fax vom Netzbetreiber in das mobile Telekommunikationsendgerät 1 zu laden und eine Umwandlung in ASCII-Textzeichen zu veranlassen. Diese Vorgänge werden alle automatisch initiiert, wenn der Benutzer das achte Bildsymbol 18 auswählt und aktiviert.

Durch Auswahl und Aktivierung eines neunten Bildsymbols 19 an der Anzeigevorrichtung 10 kann der Benutzer im zweiten Betriebszustand eine weitere Auswahlfunktion aktivieren, wonach der eingehende Faxanruf in Sprachform wiedergegeben wird. Eine diesbezüglich erforderliche Umsetzung vom Text des eingehenden Faxanrufs in Sprache erfolgt dabei je nach Leistungsfähigkeit des mobilen Telekommunikationsendgerätes 1 entweder bei einem Netzbetreiber oder im mobilen Telekommunikationsendgerät 1 selbst. Auch im Fall einer visuellen Darstellung des eingehenden Faxanrufs in Textform kann eine Formatumwandlung notwendig sein, um die Darstellung den Eigenschaften des mobilen Telekommunikationsendgerätes 1 anzupassen. Diese Anpassung kann ebenfalls vom Netzbetreiber oder vom mobilen Telekommunikationsendgerät 1 vorgenommen werden, je nach Leistungsfähigkeit des mobilen Telekommunikationsendgerätes 1. Gleiche und ähnliche Bedienfunktionsabläufe lassen sich durch Auswahl und Aktivierung des entsprechenden Bildsymbols für alle möglichen durch eingehende Rufe übermittelten Informationsinhalte, wie Videoanruf, elektronische Postnachricht, Kurznachricht, Datenfiles oder dergleichen vorsehen.

Über ein zehntes Bildsymbol 20 kann der Benutzer im zweiten Betriebszustand an der Anzeigevorrichtung 10 eine weitere Auswahlfunktion auswählen und aktivieren, wonach die Entgegennahme des eingehenden Faxanrufs abgebrochen und zum ersten Betriebszustand zurückgekehrt werden soll.

Die im zweiten Betriebszustand an der Anzeigevorrichtung 10 dargestellten Bildsymbole 18, 19, 20 können ebenfalls durch geeignete Darstellung die mit ihnen jeweils verknüpfte Auswahlfunktion so kennzeichnen, daß der Benutzer bei Betrachtung des entsprechenden Bildsymbols 18, 19, 20 sofort die zugehörige Auswahlfunktion erkennt.

Die objektorientierte Darstellung von Bedienfunktionen an der Anzeigevorrichtung 10 des mobilen Telekommunikationsendgerätes 1 ist jedoch nicht nur auf Bildsymbole beschränkt, sondern kann auch durch Textsymbole realisiert werden, was jedoch die entsprechenden Sprachkenntnisse beim Benutzer voraussetzt. Im zweiten Betriebszustand kann beispielsweise die Auswahlfunktion zur Wiedergabe des eingehenden Faxanrufs in Textform durch das Textsymbol "Text" an der Anzeigevorrichtung 10 dargestellt werden.

Die Auswahl und Aktivierung eines Bild- oder Textsymbols im zweiten Betriebszustand erfolgt dabei genauso wie für den ersten Betriebszustand für Bildsymbole beschrieben.

Es kann auch vorgesehen sein, sowohl Bildsymbole als auch Textsymbole an der Anzeigevorrichtung 10 zur Auswahl und Aktivierung von Bedienfunktionen vorzusehen.

Für den Benutzer sind alle Bedienfunktionen in Form eines Bildsymbols, eines Textsymbols oder allgemein als Objekt an der Anzeigevorrichtung 10 dargestellt. Diese Objekte lassen sich über die beschriebenen und gegebenenfalls weitere, dem Fachmann bekannte Methoden auswählen und aktivieren:
Mauszeiger, berührungssensitive Anzeigevorrichtung, Spracheingabe, usw. Der wesentliche Unterschied zu bisherigen Bedienkonzepten für mobile Telekommunikationsendgeräte besteht darin, dass jede Bedienfunktion gleichermaßen abstrakt dargestellt wird und die zur Aktivierung notwendigen technisch orientierten Abläufe keine Aktionen vom Benutzer erfordern. Alle vom Benutzer aktivierbaren Bedienfunktionen können dabei kontextorientiert und nach Möglichkeit grafisch in Form von Bildsymbolen dargestellt werden, um eine durchgängige Bedienphilosophie zu erzeugen. Der Nutzen eines solchen Bedienkonzepts gemäß dem erfindungsgemäßen mobilen Telekommunikationsendgerät wird besonders gut erkennbar, wenn nach Eingang mehrerer Nachrichten und/oder Anrufe das mobile Telekommunikationsendgerät eingeschaltet wird und mittels Bildsymbolen an der Anzeigevorrichtung 10 Aufschluss über die Anzahl und die Art der eingegangenen Rufe gibt. Dabei kann vorgesehen sein, auch verschiedene eingehende Rufe der gleichen Art, z.B. verschiedene eingegangene Faxanrufe durch jeweils ein Bildsymbol an der Anzeigevorrichtung 10 beim Einschalten des mobilen Telekommunikationsendgerätes 1 darzustellen, so dass der Benutzer auswählen kann, welche der eingegangenen Faxanrufe er in welcher Reihenfolge entgegennehmen will. Verschiedene eingehende Rufe der gleichen Art können dabei durch eine Numerierung voneinander unterscheidbar an der Anzeigevorrichtung 10 dargestellt werden.

Auch sämtliche anderen möglichen Bedienfunktionen des mobilen Telekommunikationsendgerätes 1, beispielsweise Voreinstellungen wie z.B. zur Einstellung der Lautstärke des in der Hörkapsel 45 angeordneten Lautsprechers, können in gleicher Weise über Objekte bzw. Bild- oder Textsymbole an der Anzeigevorrichtung 10 in einem entsprechend aufrufbaren Betriebszustand des mobilen Telekommunikationsendgerätes 1 zur Auswahl und Aktivierung an der Anzeigevorrichtung 10 in der beschriebenen Weise dargestellt werden. Dazu könnte beispielsweise in jedem Betriebszustand auch ein Bild- oder Textsymbol zur Auswahl und Aktivierung einer Menüliste an der Anzeigevorrichtung 10 vorgesehen sein, deren Menüpunkte in einem weiteren Betriebszustand ebenfalls in Form von Bild- oder Textsymbolen an der Anzeigevorrichtung 10 zur Auswahl und Aktivierung darstellbar sind.

Das mobile Telekommunikationsendgerät 1 kann bei Ausbildung als Mobiltelefon beispielsweise nach dem GSM-Standard (Global System for Mobile Communications) oder nach dem UMTS-Standard (Universal Mobile Telecommunications System) ausgebildet sein. Bei Ausbildung als Schnurlos-Telefon kann das mobile Telekommunikationsendgerät 1 beispielsweise nach dem DECT-Standard (Digital European Cordless Telecommunications) ausgebildet sein.

## Patentansprüche

1. Mobiles Telekommunikationsendgerät (1) mit einer Bedienoberfläche (5), die eine Anzeigevorrichtung (10) umfasst, wobei Bedienfunktionen des Telekommunikationsendgerätes (1) objektorientiert an der Anzeigenvorrichtung (10) dargestellt werden und für eine Aktivierung auswählbar sind, **dadurch gekennzeichnet, dass** mehrere verschiedene, noch nicht entgegengenommene, eingehende Rufe gleichzeitig an der Anzeigevorrichtung dargestellt werden, wobei die eingehenden Rufe als Bildsymbole dargestellt werden und einer der eingehenden Rufe durch Auswahl des entsprechenden Bildsymbols entgegengenommen wird.

2. Mobiles Telekommunikationsendgerät (1) nach Anspruch 1, **dadurch gekennzeichnet, daß** die Bedienfunktionen in Form jeweils eines Bildsymbols (11, 12, ..., 20) an der Anzeigevorrichtung (10) darstellbar sind.

3. Mobiles Telekommunikationsendgerät (1) nach Anspruch 1, **dadurch gekennzeichnet, daß** sich die Bildsymbole (11, 12, ..., 17) je nach Art des eingehenden Rufes unterscheiden.

4. Mobiles Telekommunikationsendgerät (1) nach einem der vorherigen Ansprüche, **dadurch gekennzeichnet, daß** Bedienfunktionen kontextorientiert an der Anzeigevorrichtung (10) darstellbar sind.

5. Mobiles Telekommunikationsendgerät (1) nach einem der vorherigen Anspruche, **dadurch gekennzeichnet, daß** mindestens eine Auswahlfunktion als Bildsymbol (18, 19, 20) an der Anzeigevorrichtung (10) darstellbar und bei Auswahl des entsprechenden Bildsymbols aktivierbar ist.

6. Mobiles Telekommunikationsendgerät (1) nach Anspruch 5, **dadurch gekennzeichnet, daß** durch die mindestens eine Auswahlfunktion (18, 19) die Art der Entgegennahme eines eingehenden Rufes auswählbar ist.

7. Mobiles Telekommunikationsendgerät (1) nach einem der vorherigen Ansprüche, **dadurch gekennzeichnet, daß** die Bedienfunktionen mittels eines Mauszeigers (25) zur Aktivierung auswählbar sind.

8. Mobiles Telekommunikationsendgerät (1) nach einem der vorherigen Ansprüche, **dadurch gekennzeichnet, daß** die Anzeigevorrichtung (10) berührungssensitiv ausgebildet ist und daß eine dargestellte Bedienfunktion durch Berührung der ihr zugeordneten objektorientierten Darstellung an der Anzeigevorrichtung (10) zur Aktivierung auswählbar ist.

9. Mobiles Telekommunikationsendgerät (1) nach einem der vorherigen Ansprüche, **dadurch gekennzeichnet, daß** eine an der Anzeigevorrichtung (10) objektorientiert dargestellte Bedienfunktion durch Spracheingabe zur Aktivierung auswählbar ist.

## Claims

1. Mobile telecommunication terminal (1) having a user interface (5) which comprises a display apparatus (10), wherein user functions of the telecommunication terminal (1) are shown in object-oriented fashion on the display apparatus (10) and can be selected for activation, **characterized in that** a plurality of different incoming calls which have not yet been taken are shown on the display apparatus simultaneously, with the incoming calls being shown as icons and one of the incoming calls being taken by selecting the relevant icon.

2. Mobile telecommunication terminal (1) according to Claim 1, **characterized in that** the user functions can be shown on the display apparatus (10) in the form of a respective icon (11, 12, ..., 20).

3. Mobile telecommunication terminal (1) according to Claim 1, **characterized in that** the icons (11, 12, ..., 17) differ according to the type of incoming call.

4. Mobile telecommunication terminal (1) according to one of the preceding claims, **characterized in that** user functions can be shown in context-oriented fashion on the display apparatus (10).

5. Mobile telecommunication terminal (1) according to one of the preceding claims, **characterized in that** at least one selection function can be shown as an icon (18, 19, 20) on the display apparatus (10) and can be activated when the relevant icon is selected.

6. Mobile telecommunication terminal (1) according to Claim 5, **characterized in that** the at least one selection function (18, 19) can be used to select the manner in which an incoming call is taken.

7. Mobile telecommunication terminal (1) according to one of the preceding claims, **characterized in that** the user functions can be selected for activation by means of a mouse pointer (25).

8. Mobile telecommunication terminal (1) according to one of the preceding claims, **characterized in that** the display apparatus (10) is in touch-sensitive form and **in that** a user function which is shown can be selected for activation by touching its associated object-oriented representation on the display apparatus (10).

9. Mobile telecommunication terminal (1) according to one of the preceding claims, **characterized in that** a user function shown on the display apparatus (10) in object-oriented fashion can be selected for activation by means of voice input.

## Revendications

1. Terminal de télécommunication mobile (1) muni d'une interface utilisateur (5) qui comprend un dispositif d'affichage (10), les fonctions de commande du terminal de télécommunication mobile (1) étant représentées de manière orientée objet sur le dispositif d'affichage (10) et pouvant être sélectionnées pour une activation, **caractérisé en ce que** plusieurs appels entrants différents, pas encore acceptés, sont représentés simultanément sur le dispositif d'affichage, les appels entrants étant représentés sous la forme d'icônes et l'un des appels entrants étant accepté en sélectionnant l'icône correspondante.

2. Terminal de télécommunication mobile (1) selon la revendication 1, **caractérisé en ce que** les fonctions de commande peuvent être représentées à chaque fois sous la forme d'une icône (11, 12, ..., 20) sur le dispositif d'affichage (10).

3. Terminal de télécommunication mobile (1) selon la revendication 1, **caractérisé en ce que** les icônes (11, 12, ..., 17) se différencient en fonction de la nature de l'appel entrant.

4. Terminal de télécommunication mobile (1) selon l'une des revendications précédentes, **caractérisé en ce que** les fonctions de commande peuvent être représentées de manière contextuelle sur le dispositif d'affichage (10).

5. Terminal de télécommunication mobile (1) selon l'une des revendications précédentes, **caractérisé en ce qu'**au moins une fonction de sélection peut être représentée sous la forme d'une icône (18, 19, 20) sur le dispositif d'affichage et peut être activée en sélectionnant l'icône correspondante.

6. Terminal de télécommunication mobile (1) selon la revendication 5, **caractérisé en ce que** le mode d'acceptation d'un appel entrant peut être sélectionné par l'au moins une fonction de sélection (18, 19).

7. Terminal de télécommunication mobile (1) selon l'une des revendications précédentes, **caractérisé en ce que** les fonctions de sélection peuvent être sélectionnées au moyen d'un pointeur de souris (25) en vue de leur activation.

8. Terminal de télécommunication mobile (1) selon l'une des revendications précédentes, **caractérisé en ce que** le dispositif d'affichage (10) est réalisé sensible au toucher et qu'une fonction de commande représentée peut être sélectionnée en vue de son activation en touchant la représentation orientée objet qui lui est associée sur le dispositif d'affichage (10).

9. Terminal de télécommunication mobile (1) selon l'une des revendications précédentes, **caractérisé en ce qu'**une fonction de commande représentée de manière orientée objet sur le dispositif d'affichage (10) peut être sélectionnée en vue de son activation par une entrée vocale.
